# EUROPEAN PATENT APPLICATION

(11) **EP 4 703 768 A1**
(43) Date of publication of application: **04.03.2026**
(21) Application number: 25177826.2
(22) Date of filing: 21.05.2025
(51) Int. Cl.: G01S 13/86, G01S 13/88, G01S 7/02, G01S 13/89

(54) **SYSTEM FOR SCREENING A GROUP OF PEOPLE**

(30) Priority: 29.08.2024 US 202418819705
(71) Applicant: Rohde & Schwarz GmbH & Co. KG, 81671 München (DE)
(72) Inventor: Gumbmann, Frank, Dr.-Ing., 90480 Nuremberg (DE); Schnattinger, Georg, Dr.-Ing., 84405 Dorfen (DE); Adametz, Julian, Dr., 90402 Nuremberg (DE)
(74) Representative: Rupp, Christian

(57) **Abstract**

The present disclosure relates to a system for screening a group of people in a screening area. The system comprises an RF imaging device comprising at least one TX antenna and at least one RX antenna for transmitting respectively receiving one or more RF signals; wherein the at least one TX antenna and the at least one RX antenna are arranged above and/or below a path of movement of the group of people in the screening area; and wherein the RF imaging device is configured to generate an RF image of the group of people in the screening area. The system further comprises an image processing device configured to detect at least one non-body object based on the generated RF image.

## Description

### Technical Field

The disclosure relates to systems for screening a group of people using RF imaging techniques, e.g., in the context of a security screening.

### Background Art

Personnel security scanners which operate with millimeter wave radiation are commonly used for threat detection at security checkpoints, e.g., in airports. Such security scanners typically require the person under investigation to stand still at a specific position and assume a static pose during the scan. The screening of a group of people which, e.g., move in a public area is not possible with such security scanners.

However, certain threat scenarios, such as terror attacks, occur at easily accessible, public and crowded places with the intention to cause the greatest possible damage. Thus, different screening approaches are required in view of these threat scenarios.

### Summary

Thus, there is a need to provide improved systems for screening groups of people in a screening area, which avoid the above-mentioned disadvantages.

These and other objectives are achieved by the embodiments provided in the enclosed independent claims. Advantageous implementations of the present disclosure are further defined in the dependent claims.

According to a first aspect, the disclosure relates to a system for screening a group of people in a screening area. The system comprises a radio frequency (RF) imaging device comprising at least one TX antenna and at least one RX antenna for transmitting respectively receiving one or more RF signals; wherein the at least one TX antenna and the at least one RX antenna are arranged above and/or below a path of movement of the group of people in the screening area; and wherein the RF imaging device is configured to generate an RF image of the group of people in the screening area. The system further comprises an image processing device configured to detect at least one non-body object based on the generated RF image.

This achieves the advantage that a group of people, which are moving through the screening area, can be scanned at once or in quick succession. Due to the arrangement of the Rx/Tx antennas above or below the screening area, shadowing risks (i.e., people in the foreground blocking the view of the RF imaging device) are reduced and all people in the area can be imaged. Furthermore, the arrangement above/below the screening area allows a hidden installation and/or reduces the influence on the flow of people in the area.

The system can be a security scanner for screening the people in the screening area using RF imaging techniques. The screening can be a security screening for detecting threat objects and/or contraband. The RF imaging device can be a radar scanner which performs an RF imaging and/or RF ranging. For instance, the RF imaging device is an RF imaging sensor.

The one or more RF signals can be in a millimeter wave (mmWave) range of the electromagnetic spectrum. Thus, the RF imaging device can be an mmWave imaging device.

The at least one Tx antenna can be configured for sending out one or more RF signals towards the screening area, and the at least one Rx antenna can be configured for capturing reflections, refractions and/or transmissions of the one or more RF signals from the screening area. The RF imaging device can be configured to generate the RF image of the group of people in the screening area based on the received RF signals.

The image processing device can comprise a processor configured to analyze the generated RF image in order to detect the at least one non-body object.

The non-body object can be an object on a person in the group of people, e.g. a threat object such as a weapon or contraband. The non-body object can be a metallic or a non-metallic object. For instance, the image processing device can be configured to detect the non-body object in the generated RF image.

In an implementation form of the first aspect, the at least one Tx antenna and the at least one Rx antenna are arranged in at least one antenna array of the RF imaging device; wherein the at least one antenna array is arranged angled towards a walking surface or a ceiling surface in the screening area (or adjacent to the screening area).

For instance, the RF imaging device comprises at least two antenna arrays which are arranged in a roof-like arrangement above or below the screening area. Thereby, each antenna array can be arranged at an angle, i.e. tilted, relative to the surface in the screening area. In this way, it can be avoided that the walking people shadow each other. The Rx/Tx antennas respectively antenna arrays do not have to be arranged directly above or below the screening area.

The least one antenna array can be a 2D antenna array which is arranged at an angle smaller than 90° and larger than 0° (e.g., at an angle of 45°) relative to the walking respectively ceiling surface in the screening area. The walking respectively ceiling surface can be formed by a floor or a ceiling in the screening area.

For example, a plurality of antenna arrays can be arranged along a path of movement of the people in the screening area.

In an implementation form of the first aspect, the system comprises at least one RF transparent radome which is arranged to cover the at least one Rx and at least one Tx antenna. This provides the advantage that the antennas are not directly visible to the people in the screening area. For example, the radome covers all visible parts of the RF imaging device.

In an implementation form of the first aspect, the image processing device is configured to perform a polarimetric evaluation of the RF signals received by the at least one Rx antenna.

For instance, the image processing device can take the polarization of the transmitted and/or the received RF signals transmitted into account. The polarimetric evaluation can be based on orthogonal polar transmissions and receptions of the RF signals by the Tx respectively Rx antennas.

In an implementation form of the first aspect, the image processing device is configured to detect flat surfaces, edges and/or dipoles in the screening area based on the polarimetric evaluation.

In an implementation form of the first aspect, the at least one Rx antenna is arranged to receive multipath reflections of the RF signals from RF reflecting surfaces in the screening area.

For instance, by means of multipath reflections, illumination of regions (e.g., body parts) in the screening area that cannot be directly imaged can be achieved. The RF imaging device can highlight areas in the RF image that were generated from multipath reflections (e.g., by color-coding these areas in the image).

The image processing device can use time-of-flight (ToF) information to map the (multipath) reflections of the RF signals to certain portions of a body of the person at the same ToF.

In an implementation form of the first aspect, the RF imaging device is configured to self-calibrate based on reflections of the RF signals received from known locations in the screening area. For instance, the system can comprise a reflective surface, e.g. a metal floor plate, which is used for self-calibration and/or to generate multipath reflections.

In an implementation form of the first aspect, the system comprises at least one further imaging sensor, such as an RGB-D or a time-of-flight sensor, configured for capturing a 3D image of the group of people in the screening area; wherein the image processing device is configured to detect the at least one non-body object based on the RF image and the 3D image.

For instance, the image processing device can merge the RF image and the 3D image. This can result in an image with enhanced resolution. For example, the image processing device can detect the at least one non-body object based on the merged image.

The image processing device can further use information from the 3D image, to improve the analysis of the RF image and/or merged image for the threat detection. For instance, the image processing device can exclude certain locations in the RF image and/or merged image as not relevant (e.g., hands) to reduce false alarm rate, know where relevant areas in the screening area are and only reconstruct these relevant areas, improve processing times for a SAR (Inverse Synthetic Aperture Radar) signal processing, improve resolution of the RF image by using information of the 3D image, track the movement of people in the screening area, and/or combine several images from the same area to generate an image with enhanced resolution.

According to a second aspect, the disclosure relates to a system for screening a group of people in a screening area. The system comprises an RF imaging device comprising at least one TX antenna and at least one RX antenna for transmitting respectively receiving one or more RF signals; wherein the RF imaging device is configured to generate an RF image of the group of people in the screening area. The system further comprises an image processing device configured to detect at least one non-body object based on the generated RF image; wherein the image processing device is configured to perform a polarimetric evaluation of the RF signals received by the at least one Rx antenna.

In an implementation form of the second aspect, the image processing device is configured to detect flat surfaces, edges and/or dipoles in the screening area based on the polarimetric evaluation.

In an implementation form of the second aspect, the at least one TX antenna and at least one RX antenna are arranged in at least one column to a side of the screening area.

In an implementation form of the second aspect, the screening area is an elevator cabin, wherein the at least one TX antenna and at least one RX antenna are arranged above or below the elevator cabin.

In an implementation form of the second aspect, the at least one TX antenna and the at least one RX antenna are arranged above and/or below a path of movement of the group of people in the screening area.

In an implementation form of the second aspect, the at least one Tx antenna and the at least one Rx antenna are arranged in at least one antenna array of the RF imaging device; wherein the at least one antenna array is arranged angled towards a walking surface or a ceiling surface in the screening area.

In an implementation form of the second aspect, the system comprises at least one RF transparent radome which is arranged to cover the at least one Rx and at least one Tx antenna.

In an implementation form of the second aspect, the at least one Rx antenna is arranged to receive multipath reflections of the RF signals from RF reflecting surfaces in the screening area.

In an implementation form of the second aspect, the RF imaging device is configured to self-calibrate based on reflections of the RF signals received from known locations in the screening area.

In an implementation form of the second aspect, the system comprises at least one further imaging sensor, such as an RGB-D or a time-of-flight sensor, configured for capturing a 3D image of the group of people in the screening area; wherein the image processing device is configured to detect at least one non-body object based on the RF image and the 3D image.

According to a third aspect, the disclosure relates to a system for screening a group of people in a screening area. The system comprises an RF imaging device comprising at least one TX antenna and at least one RX antenna for transmitting respectively receiving one or more RF signals; wherein the RF imaging device is configured to generate an RF image of the group of people in the screening area. The system further comprises an image processing device configured to detect at least one non-body object based on the generated RF image; wherein the at least one Rx antenna is arranged to receive multipath reflections of the RF signals from RF reflecting surfaces in the screening area.

In an implementation form of the third aspect, the comprising at least one TX antenna and at least one RX antenna are arranged in at least one column to a side of the screening area.

In an implementation form of the third aspect, screening area is an elevator cabin, wherein the at least one TX antenna and at least one RX antenna are arranged above or below the elevator cabin.

In an implementation form of the third aspect, the at least one TX antenna and the at least one RX antenna are arranged above and/or below a path of movement of the group of people in the screening area.

In an implementation form of the third aspect, the at least one Tx antenna and the at least one Rx antenna are arranged in at least one antenna array of the RF imaging device; wherein the at least one antenna array is arranged angled towards a walking surface or a ceiling surface in the screening area.

In an implementation form of the third aspect, the system comprises at least one RF transparent radome which is arranged to cover the at least one Rx and at least one Tx antenna.

In an implementation form of the third aspect, the image processing device is configured to perform a polarimetric evaluation of the RF signals received by the at least one Rx antenna.

In an implementation form of the third aspect, the image processing device is configured to detect flat surfaces, edges and/or dipoles in the screening area based on the polarimetric evaluation.

In an implementation form of the third aspect, the RF imaging device is configured to self-calibrate based on reflections of the RF signals received from known locations in the screening area.

In an implementation form of the third aspect6, the system comprises at least one further imaging sensor, such as an RGB-D or a time-of-flight sensor, configured for capturing a 3D image of the group of people in the screening area; wherein the image processing device is configured to detect at least one non-body object based on the RF image and the 3D image.

### Brief Description of the Drawings

The above-described aspects and implementation forms of the present disclosure will be explained in the following description of specific embodiments in relation to the enclosed drawings, in which:
Fig. 1 shows a schematic diagram of a system for screening a group of people in a screening area according to an embodiment;
Figs. 2A and 2B show exemplary arrangements of Rx and Tx antennas according to an embodiment;
Figs. 3A and 3B show exemplary arrangements of Rx and Tx antennas according to an embodiment,
Fig. 4 shows an exemplary implementation of a system for screening a group of people according to an embodiment;
Fig. 5 shows results of screening test measurements performed with a system for screening a group of people according to an embodiment;
Fig. 6 shows a schematic diagram of a system for screening a group of people in a screening area according to an embodiment; and
Figs. 7A and 7B show exemplary implementations of a system for screening a group of people according to an embodiment.

### Detailed Descriptions of Embodiments

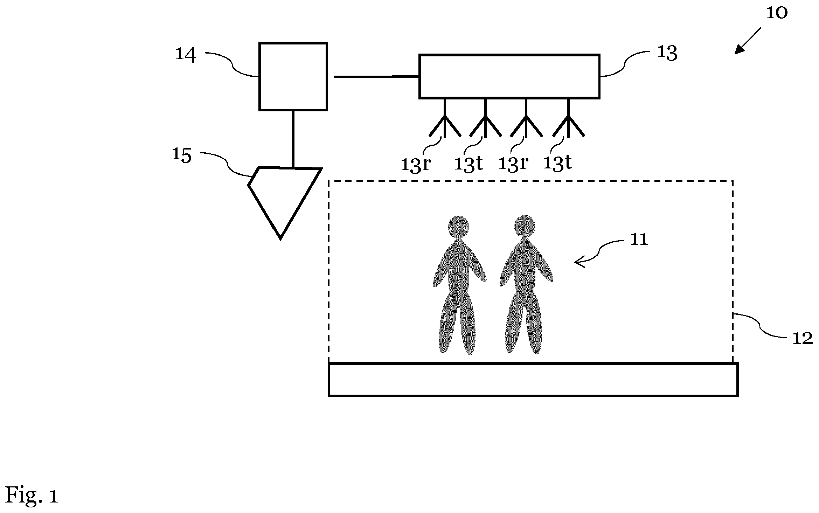

Fig. 1 shows a system 10 for screening a group of people 11 in a screening area 12 according to an embodiment.

The system 10 comprises: an RF imaging device 13 comprising at least one TX antenna 13t and at least one RX antenna 13r for transmitting respectively receiving one or more RF signals; wherein the at least one TX antenna 13t and the at least one RX antenna 13r are arranged above and/or below a path of movement of the group of people 11 in the screening area 12; and wherein the RF imaging device is configured to generate an RF image of the group of people in the screening area. The system further comprises an image processing device configured to detect at least one non-body object based on the generated RF image.

The one or more RF signal can be in a millimeter wave (mmWave) range of the electromagnetic spectrum. Thus, the RF imaging device can be a mmWave imaging device. For instance, the RF imaging device is an RF imaging sensor or module.

The RF imaging device could also operate at lower frequencies, e.g. the FCC UWB frequency band from 3.6 GHz to 10.6 GHz. By using these frequencies, unwanted motion blurring and the influence of everyday clothing can be reduced and, thus, a false alarm rate can be reduced.

The at least one TX antenna 13t can be configured for sending out one or more RF signals towards the screening area 12, and the at least one RX antenna 13r can be configured for capturing reflections, refractions and/or transmissions of the one or more RF signals from the screening area 12. The RF imaging device 13 can be configured to generate the RF image of the group of people in the screening area 12 based on the received RF signals.

The system 10 can form a security scanner for screening the people in the screening area. The non-body object can be a threat object on a person 11 of the group of people, e.g. a weapon. The non-body object can be a metallic or a non-metallic object. The non-body objects can be hidden below the clothes of a person. For instance, the image processing device 14 can be configured to detect the non-body object in the generated RF image.

The system can screen the group of people 11 while they walk through the screening area 12. Due to the arrangement of the antennas 12r, 12t above or below the screening area, shadowing risks (i.e., the risk of people 11 in the group shadowing each other and thus blocking the view of the RF imaging device 13 can be reduced. For instance, due to this arrangement, people with malicious intent cannot hide inside a large group of people.

Furthermore, the arrangement above or below the group of people allows for a hidden installation of the system 10 and/or reduces the influence of the system 10 on the flow of people through the screening area. For instance, the antennas 13r, 13t could be covered by a radome to further hide them from the view of the people 11.

Optionally, the system 10 comprises at least one further imaging sensor 15 for capturing a 3D image of the group of people 11 in the screening area 12. The at least one further imaging sensor 15 can comprise an RGB-D sensor and/or a time-of-flight (ToF) sensor. For instance, the image processing device is configured to detect at least one non-body object based on the RF image and the 3D image.

The image processing device could use the image data from the further imaging sensor 15 for different tasks: to improve the separation of different persons and enhance their location detection, and/or to tack the movement of the scanned persons. Furthermore, the image processing device 14 can combine different image frames of the RF and/or 3D images by means of an adapted reconstruction algorithm to enhance the illumination and spatial resolution of the images which leads to improved detection results. The latter is known as ISAR (Inverse Synthetic Aperture Radar).

The image processing device 14 could also merge the RF image and the 3D image resulting in an image with enhanced resolution and/or showing additional features. For example, the image processing device can detect the at least one non-body object in the merged image.

In addition or alternatively, a full polarimetric measurement and evaluation can be implemented in the system 10 for an enhanced threat detection.

For example, the image processing device 14 can be configured to perform a polarimetric evaluation of the RF signals received by the at least one Rx antenna. The polarimetric evaluation can be based on orthogonal polar transmissions and receptions of the RF signals by the Tx respectively Rx antenna. Thereby, the image processing device 14 can take a polarization of the RF signals transmitted by the at least one Tx antenna 13t and the signals received by the at least one Rx antenna 13r into account.

For instance, the image processing device 11 can be configured to detect flat surfaces, edges and/or dipoles in the screening area 12 based on the polarimetric evaluation.

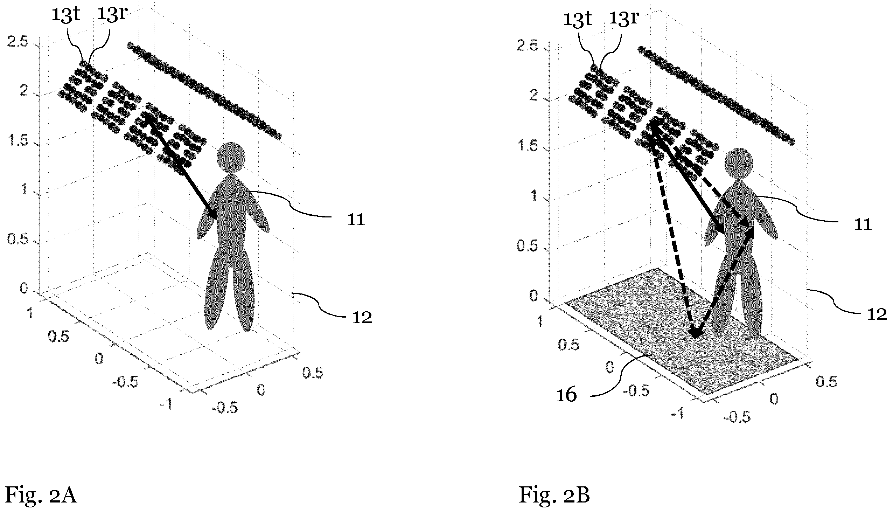

Fig. 2A shows an exemplary arrangement of the Rx and Tx antennas 13r, 13t according to an embodiment. Thereby, the antennas 13r, 13t are arranged in a roof-like geometry above the screening area 12. An RF signal emitted by the Rx antennas is indicted by a bold arrow.

As shown in Fig. 2A, the RF imaging device 13 can comprise a plurality of antenna arrays, wherein each antenna array comprises a number of Rx and Tx antennas 13r, 13t arranged in a specific pattern. These antenna arrays can be arranged angled (i.e., not parallel) towards the screening area 14, e.g. towards a walking surface in the screening area.

For instance, in Fig. 2A, the RF imaging device 13 comprises eight antenna arrays, which are arranged in a roof-like arrangement above the screening area 12. Antenna arrays in such an arrangement could be installed on ceilings or archways in public areas and scan the people that pass underneath, e.g., for security threats. Thus, the flow of walking persons is not disturbed. Furthermore, this tilted arrangement above the people in the area 12 reduces unwanted shadowing.

Fig. 2B shows another exemplary arrangement of the Rx and Tx antennas 13r, 13t. Thereby, a reflective surface 16 is arranged in the screening area 12. The reflective surface 16 is e.g. a metal floor plate. This reflective surface 16 can be facilitated for measurements with multipath signals (indicated by dashed arrows in Fig. 2B).

For instance, the at least one Rx antenna is arranged to receive multipath reflections of the RF signals from the RF reflecting surface 16 in the screening area 12. For instance, by means of such multipath reflections, illumination of regions (e.g., body parts) in the screening area 12 that cannot be directly imaged can be achieved. The RF imaging device 14 can further highlight areas in the RF image that were generated from multipath reflections (e.g., by color-coding these areas).

In addition or alternatively, the RF imaging device 14 can be configured to self-calibrate based on reflections of the RF signals received from known locations in the screening area 12. For instance, reflections from the reflecting surface 16 could be used for such self-calibrations. For instance, self-calibration could also be realized by means of mutual measurements of incorporated radar modules.

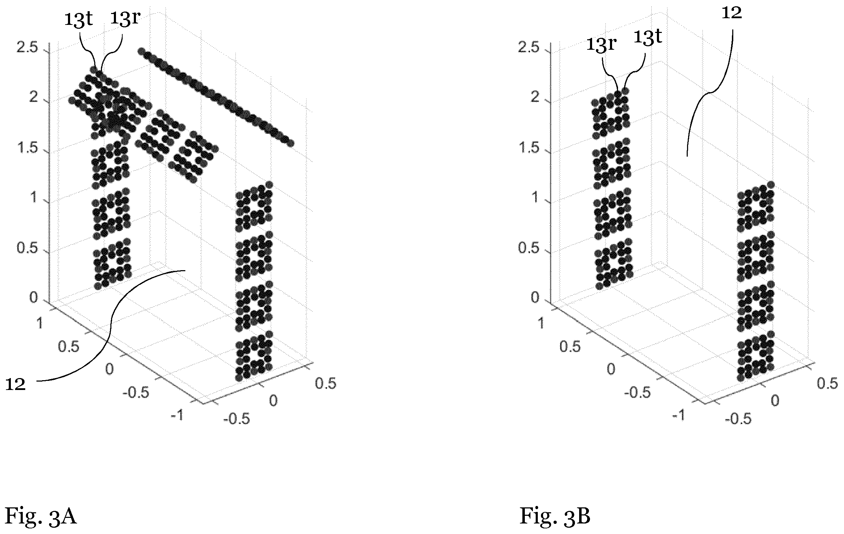

Figs. 3A and 3B show further exemplary arrangements of Rx and Tx antennas according to an embodiment.

In Fig. 3A, the RF imaging device 13 comprises additional Rx and Tx antennas 13r, 13t which are arranged in antenna arrays to both sides of the screening area. Such a portal and roof sensor geometry offers enhanced illumination and resolution. Furthermore, multipath signals could be recorded with such an antenna arrangement, e.g., by utilizing an additional reflective floor plate.

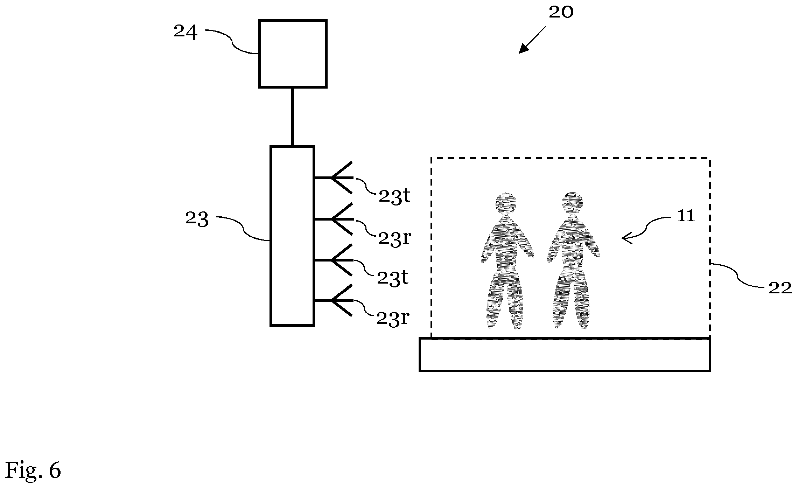

Fig. 3B shows an exemplary portal sensor geometry without Rx and Tx antennas above or below the screening area 12. Such a sensor geometry could be used for a system 20 as shown in Fig. 6.

For instance, the portal sensor geometry of Fig. 3B could be installed at escalators or comparable places. Furthermore, multipath signals could be recorded with such an antenna arrangement, e.g., by utilizing an additional floor plate.

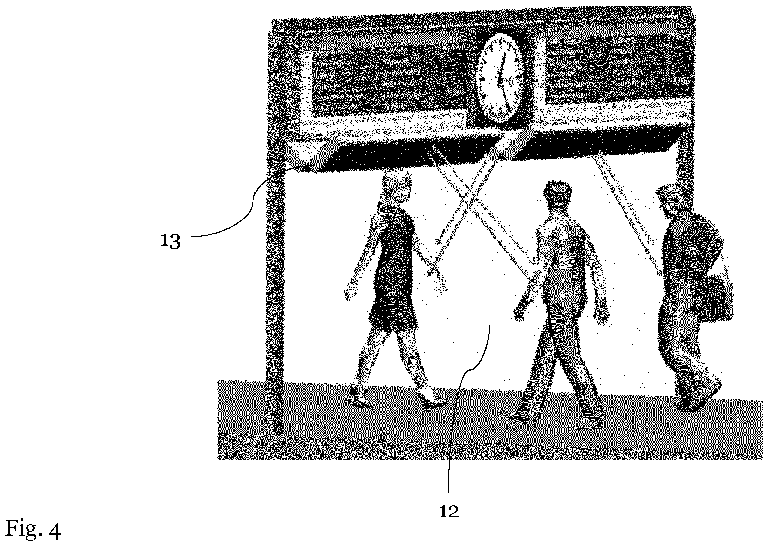

Fig. 4 shows an exemplary implementation of a system for screening a group of people according to an embodiment. In the example, the Rx and Tx antennas of the RF imaging device 13 could be installed in a display board at an airport or a train station. For instance, the system 10 can scan the people walking below the display board for security threats. The antennas 13r, 13t could additionally be covered by an RF transparent cover, e.g. a radome, to facilitate a hidden installation.

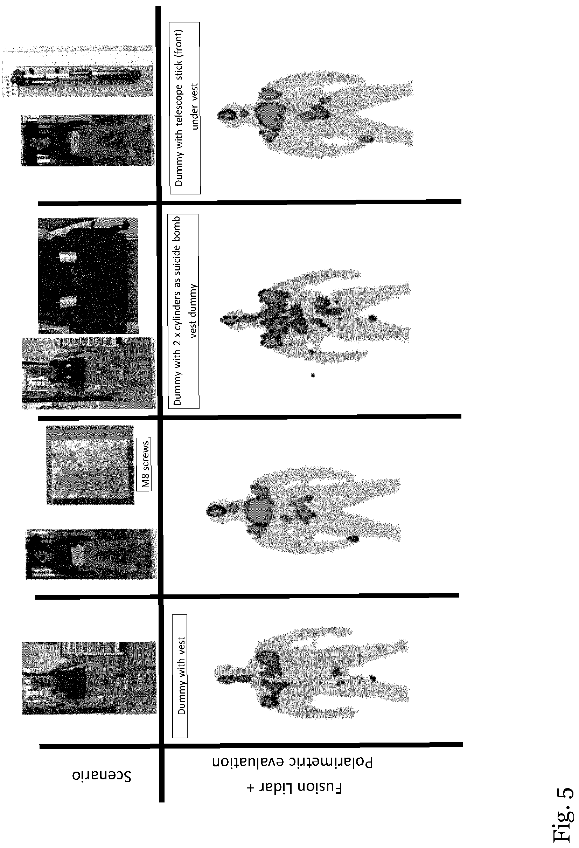

Fig. 5 shows results of screening test measurements performed with a system 10 for screening a group of people, as e.g. shown in Fig. 1, according to an embodiment.

The system 10 used to carry out these test measurements was equipped with full polarimetric radar front ends operating with a UWB pulse technology at frequencies of 3.6 GHz to 10.6 GHz (FCC UWB frequency band). The RF imaging device 13 of the system comprised 8 Tx antennas (4 for each polarization) and 16 Rx antennas (8 for each polarization). Besides the RF imaging device 13 the system comprised an additional 3D sensor 15 in the form of a ToF camera.

The top images in Fig. 5 show different threat scenarios that were used during testing. These threat scenarios include different objects on a person.

The bottom images show resulting images generated by the system for the different scenarios via data fusion of the RF images recorded with the RF imaging device 13 and the 3D image recorded with the ToF camera (e.g., a Lidar sensor). The system 10 or more specifically the image processing device 14 was further configured to carry out a polarimetric evaluation of the received RF signal.

As shown in Fig. 5, the generated images can comprise a 3D point cloud of a contour of the recorded person(s) that is generated by the ToF camera (light grey sections of the images). The results of the polarimetric evaluation, e.g. detected objects or areas of interest, can be visualized on the respective areas of the contour. For instance, the results of the polarimetric evaluation include volume-/dipole scatter, single reflections (e.g., plain areas such as shoulders or upper chest) and double reflections (e.g., object corners). These results can be color coded according to an RGB scheme (e.g., red for volume-/dipole scatter, green for single reflections, blue for double reflections) and displayed on the 3D point cloud.

Fig. 6 shows a schematic diagram of a system 20 for screening a group of people in a screening area 22 according to an embodiment.

The system 20 comprises an RF imaging device 23 comprising at least one TX antenna 23t and at least one RX antenna 23r for transmitting respectively receiving one or more RF signals; wherein the RF imaging device 23 is configured to generate an RF image of the group of people 11 in the screening area 22; and an image processing device 24 configured to detect at least one non-body object based on the generated RF image.

Thereby, the image processing device 24 can be configured to perform a polarimetric evaluation of the RF signals received by the at least one Rx antenna 23r, and/or the at least one Rx antenna 23r can be arranged to receive multipath reflections of the RF signals from RF reflecting surfaces in the screening area 22.

For instance, as shown in Fig. 6, the at least one TX antenna 23t and at least one RX antenna 23r are arranged in at least one column to a side of the screening area 22. However, the Rx and Tx antennas could also be arranged above or below the screening area, e.g., above or below a path of movement of the group of people in the screening area as shown for the system 10 in Fig. 1. Also, a combination of Rx/Tx antennas being arranged to the side(s) and above or below the screening area 22 is possible, as e.g. shown in Fig. 3A.

The system 20 shown in Fig. 6 can be essentially identical to the system 10 shown in Fig. 1 and can comprise the same elements and configurations, besides a possible different arrangement of the Rx and Tx antennas.

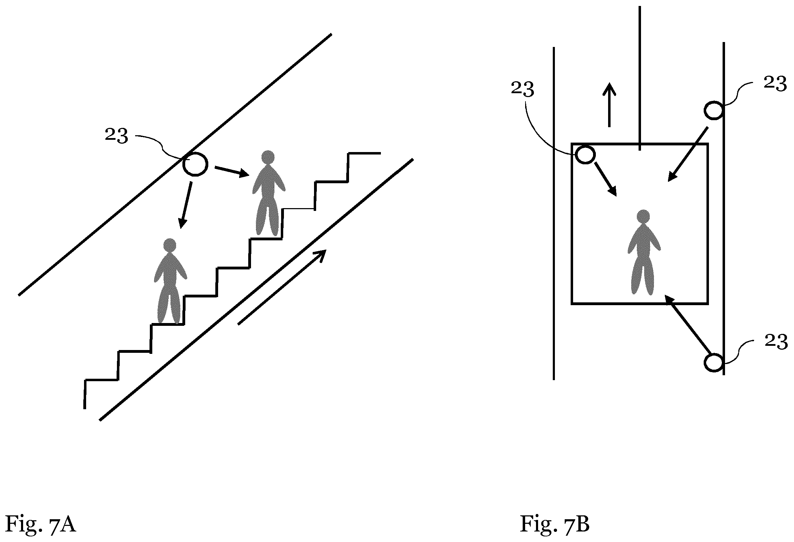

Figs. 7A and 7B show exemplary implementations of the system 20 according to an embodiment. In the example shown in Fig. 7A, the system 70 is implemented at an escalator. For instance, the RF imaging device 23 or more specifically its Rx and Tx antennas 23r, 23t are arranged above the escalator for screening people standing on the escalator.

In the example shown in Fig. 7B, the screening area is an elevator cabin, wherein the at least one Rx and Tx antennas 23r, 23t are arranged above or below the elevator cabin for screening the people in the elevator. However, the antennas 23r/23t could also be arranged in the elevator shaft.

While various embodiments of the present disclosure have been described above, it should be understood that they have been presented by way of example only, and not limitation. Numerous changes to the disclosed embodiments can be made in accordance with the disclosure herein, without departing from the spirit or scope of the disclosure. Thus, the breadth and scope of the present disclosure should not be limited by any of the above-described embodiments. Rather, the scope of the disclosure should be defined in accordance with the following claims and their equivalents.

Although the disclosed embodiments have been illustrated and described with respect to one or more implementations, equivalent alterations and modifications will occur or be known to others skilled in the art upon the reading and understanding of this specification and the annexed drawings. In addition, while a particular feature of the present disclosure may have been disclosed with respect to only one of several implementations, such feature may be combined with one or more other features of the other implementations as may be desired and advantageous for any given or particular application.

## Claims

1. A system for screening a group of people in a screening area, comprising:
an RF imaging device comprising at least one TX antenna and at least one RX antenna for transmitting respectively receiving one or more RF signals;
wherein the at least one TX antenna and the at least one RX antenna are arranged above and/or below a path of movement of the group of people in the screening area; and
wherein the RF imaging device is configured to generate an RF image of the group of people in the screening area;
wherein the system further comprises an image processing device configured to detect at least one non-body object based on the generated RF image.

2. The system of claim 1,
wherein the at least one Tx antenna and the at least one Rx antenna are arranged in at least one antenna array of the RF imaging device;
wherein the at least one antenna array is angled towards a walking surface or a ceiling surface in the screening area.

3. The system of claim 1 or 2,
wherein the system comprises at least one RF transparent radome which is arranged to cover the at least one Rx and at least one Tx antenna.

4. The system of any of the preceding claims,
wherein the image processing device is configured to perform a polarimetric evaluation of the RF signals received by the at least one Rx antenna.

5. The system of claim 4,
wherein the image processing device is configured to detect flat surfaces, edges and/or dipoles in the screening area based on the polarimetric evaluation.

6. The system of any of the preceding claims,
wherein the at least one Rx antenna is arranged to receive multipath reflections of the RF signals from RF reflecting surfaces in the screening area.

7. The system of any of the preceding claims,
wherein the RF imaging device is configured to self-calibrate based on reflections of the RF signals received from known locations in the screening area.

8. The system any of the preceding claims,
wherein the system comprises at least one further imaging sensor, such as an RGB-D or a time-of-flight sensor, configured for capturing a 3D image of the group of people in the screening area;
wherein the image processing device is configured to detect the at least one non-body object based on the RF image and the 3D image.

9. A system for screening a group of people in a screening area, comprising:
an RF imaging device comprising at least one TX antenna and at least one RX antenna for transmitting respectively receiving one or more RF signals;
wherein the RF imaging device is configured to generate an RF image of the group of people in the screening area; and
an image processing device configured to detect at least one non-body object based on the generated RF image;
wherein the image processing device is configured to perform a polarimetric evaluation of the RF signals received by the at least one Rx antenna.

10. The system of claim 9,
wherein the image processing device is configured to detect flat surfaces, edges and/or dipoles in the screening area based on the polarimetric evaluation.

11. The system of claim 9 or 10,
wherein the at least one TX antenna and at least one RX antenna are arranged in at least one column to a side of the screening area.

12. The system of any of claims 9 to 11,
wherein the screening area is an elevator cabin, wherein the at least one TX antenna and at least one RX antenna are arranged above or below the elevator cabin.

13. A system for screening a group of people in a screening area, comprising:
an RF imaging device comprising at least one TX antenna and at least one RX antenna for transmitting respectively receiving one or more RF signals;
wherein the RF imaging device is configured to generate an RF image of the group of people in the screening area; and
an image processing device configured to detect at least one non-body object based on the generated RF image;
wherein the at least one Rx antenna is arranged to receive multipath reflections of the RF signals from RF reflecting surfaces in the screening area.

14. The system of claim 13,
wherein the at least one TX antenna and at least one RX antenna are arranged in at least one column to a side of the screening area.

15. The system of claim 13 or 14,
wherein the screening area is an elevator cabin, wherein the at least one TX antenna and at least one RX antenna are arranged above or below the elevator cabin.
